# EUROPÄISCHE PATENTSCHRIFT

(11) **EP 3 814 232 B1**
(45) Veröffentlichungstag und Bekanntmachung des Hinweises auf die Patenterteilung: **13.04.2022**
(21) Anmeldenummer: 19724464.3
(22) Anmeldetag: 14.05.2019
(51) Int. Cl.: B64F 5/50, B64F 5/10, B66C 23/72, B66C 23/78

(54) **VORRICHTUNG ZUM EIN- UND AUSBAU VON FLUGZEUGFAHRWERKEN**
DEVICE FOR THE INSTALLATION AND DISMOUNTING OF AIRCRAFT LANDING GEAR
DISPOSITIF POUR LE MONTAGE ET LE DÉMONTAGE DE TRAINS D'ATTERRISSAGE D'AÉRONEFS

(30) Priorität: 27.06.2018 DE 102018115455
(43) Veröffentlichungstag der Anmeldung: 05.05.2021
(73) Patentinhaber: HYDRO Holding KG, 77781 Biberach (DE)
(72) Erfinder: OCKENFUSS, Ulrich, 77723 Gengenbach (DE); JANSEN, Dirk, 77797 Ohlsbach (DE)
(74) Vertreter: Glawe, Delfs, Moll
(86) Internationale Anmeldenummer: PCT/EP2019/062349
(87) Internationale Veröffentlichungsnummer: WO 2020/001844

(56) Entgegenhaltungen:
- EP-A1- 0 597 688
- EP-A1- 3 159 270
- CN-A- 106 742 043
- CN-U- 206 664 956
- FR-A1- 3 050 675
- US-A- 4 090 625
- US-A1- 2010 119 343

## Beschreibung

### Technisches Gebiet

Die vorliegende Erfindung betrifft eine Vorrichtung zum Ein- und Ausbau von Flugzeugfahrwerken.

### Beschreibung des Standes der Technik

Die Flugzeughersteller geben den Wartungsbetrieben flugzeugspezifische Gerätschaften vor, die für den Aus- und Einbau der unterschiedlichen Flugzeugfahrwerke zu verwenden sind. Hierbei handelt es sich fast ausschließlich um Galgen (Aufhängungen), die mit Kettenzügen versehen sind und an der mittels Dreibockhebern angehobenen Flugzeugstruktur zu montieren sind.

Diese Hilfswerkzeuge werden mittlerweile bezüglich der Arbeitssicherheit als kritisch bewertet, da es sich prozessbedingt nicht vermeiden lässt, unter den oft mehrere Tonnen schweren Lasten zu arbeiten. Ein Reißen einer Kette würde eine direkte Bedrohung für Leib und Leben der Monteure darstellen. Hinzu kommt, dass sowohl durch die langwierige Betätigung der Kettenzüge und den erheblichen Kraftaufwand, der von Nöten ist, um die schwebende Last in bis zu sechs unterschiedlichen Freiheitsgraden zu bewegen, mit einer hohen körperlichen Belastung der Flugzeugmonteure verbunden sind. Viele Bewegungen der einzubauenden Fahrwerke werden nach dem "Versuch- und Rüttelprinzip" ausgeführt. So kann der Einbau eines größeren Hauptfahrwerks durchaus mehrere Stunden in Anspruch nehmen.

Auf Grund der geschilderten Nachteile verwenden größere Wartungsbetriebe alternative Hilfsmittel, die Sie selbst validieren und zulassen. So werden zum Beispiel in Docks, die nur für ein spezielles Flugzeugmuster ausgelegt sind, im Bereich der Fahrwerke absenkbare Bodensegmente (sogenannte Pits) verwendet um die Fahrwerke abzusenken bzw. anzuheben.

Im Markt sind auch als fahrbare Greifarme ausgebildete Wechselgeräte erhältlich, bspw. von der Firma Didsbury, sowie Einbau-Bühnen, mit deren Hilfe ein Fahrwerk mit mehreren Freiheitsgraden manipuliert werden kann. Hebebühnen haben allerdings den Nachteil, dass Sie bezüglich der Unterfahrhöhen begrenzt sind und somit Hauptfahrwerke kleinerer Flugzeuge und generell die Nasenfahrwerke nicht gewechselt werden können.

Alle existierenden bodengestützten Fahrwerkwechselgeräte haben den Nachteil gemeinsam, dass sie entweder sehr genau unter dem Einbaupunkt vorpositioniert oder während des Einbaus verfahren werden müssen. Dies erschwert/kompliziert vor allem den Einbauprozess, bei dem Feinbewegungen im Submillimeter-Bereich erforderlich sind, erheblich.

Bodengestützte Vorrichtungen zum Ein- und Ausbau von Flugzeugfahrwerken werden beispielsweise in FR3050675 A1 und in EP3159270 A1 beschrieben.

### Zusammenfassung der Erfindung

Ausgehend hiervon wird erfindungsgemäß eine Vorrichtung mit den Merkmalen des Anspruchs 1 vorgeschlagen.

Der Erfindung liegt die Erkenntnis zugrunde, einen an unterschiedliche Fahrwerktypen und -größen anpassbaren Aufnahmerahmen vorzusehen, der mittels einer Betätigungseinrichtung, die zur Durchführung von Hub-/Gierbewegungen mit hoher Präzision ausgebildet ist, angekoppelt und in eine gewünschte Fahrwerk-Montageposition bewegt werden kann. Die Betätigungseinrichtung umfasst einen Betätigungsarm mit Grobpositionierungselementen und Feinpositionierungselementen.

Die erfindungsgemäße Vorrichtung verfügt daher über einen sehr groß dimensionierten Arbeitsraum. Dadurch wird erreicht, dass eine genaue Vorpositionierung unnötig ist und dass Fahrwerke unterschiedlichster Abmessungen und Einbauhöhen einer breiten Palette von Flugzeugtypen gewechselt (ein-/ausgebaut) werden können. Die Erfindung verbindet somit ein hohes Maß an Universalität mit einer hohen Bedienersicherheit einer während des gesamten Prozesses gesicherten Last und einer geringen körperlichen Belastung der Flugzeugmonteure.

Mit Hilfe der Betätigungseinrichtung LGR werden Fahrwerke von Flugzeugen aus- und eingebaut. Zur Aufnahme der Fahrwerke sind Aufnahmerahmen vorgesehen. Ein Aufnahmerahmen ist erfindungsgemäß so ausgebildet, dass er an unterschiedliche Fahrwerke anpassbar ist und somit möglichst viele unterschiedliche Fahrwerke (insb. in im wesentlichen senkrechter Aufrichtung) aufnehmen kann. Er dient bei der weiteren Überprüfung (Test) und Aufrüstung eines aufgenommenen Fahrwerks als Plattform. Der Aufnahmerahmen verfügt bspw. über passive Rollen, die das Gewicht des Fahrwerks aufnehmen und dessen Transport und Positionierung in die Nähe des Montagebereichs ermöglichen.

Der Aufnahmerahmen verfügt über das Gegenstück eines Kopplungsadapters, über den der Betätigungsarm den Aufnahmerahmen mit oder ohne Fahrwerk aufnehmen und in mehreren, bspw. sechs, Freiheitsgraden bewegen kann. Der Betätigungsarm kann hierfür über eine Art Kardangelenk verfügen, welches eine präzise Bewegung in drei Achsen ermöglicht. Die Horizontal-, Vertikal- und Rotationsbewegung des Aufnahmerahmens erfolgt erfindungsgemäß über den Betätigungsarm der Betätigungseinrichtung, der damit das in dem Aufnahmerahmen eingespannte Flugzeugfahrwerk anheben und manipulieren kann.

Die Grobpositionierungselemente können bspw. als Teleskoparmanordnung ausgebildet sein, mit einem insbesondere drehbar auf dem Unterbau angeordneten und gegenüber dem Unterbau winkelverstellbaren Hauptarm und einem aus dem Hauptarm ausfahrbaren Teleskoparm. Bei geeigneter Dimensionierung wird mit einer derartigen Teleskoparmanordnung die notwendige Hubhöhe und auch die notwendige Stabilität zur Lastaufnahme erreicht.

Die Feinpositionierungselemente können bspw. mittels eines kardanartig an dem Betätigungsarm angelegten Drehpräzisionselements realisiert sein. Ein derartiges Drehpräzisionselement ist bspw. ein Drehkranz bzw. Schwenktrieb mit integriertem Schneckentrieb, wie er bspw. von der Firma IMO in der Baureihe WD-H im Markt erhältlich ist. Das Drehpräzisionselement kann um zwei bspw. um 90° zueinander verlaufende Achsen dreh- und kippbar angeordnet sein.

Vor der Montage eines Fahrwerks führt die Betätigungseinrichtung den leeren Aufnahmerahmen an das einzubauende Fahrwerk heran. Das Fahrwerk wird mit Hilfe eines Krans oder einer sonstigen Hebevorrichtung aus seiner Transportkiste gehoben, in eine senkrechte Stellung gebracht, auf den Aufnahmerahmen gehoben und mit diesem fest verbunden, bspw. mit auf dem Aufnahmerahmen vorgesehenen verstellbaren Befestigungsmitteln. Die Betätigungseinrichtung fährt dann den beladenen Aufnahmerahmen auf seinen Rollen schiebend oder ziehend in eine Position im Bereich schräg unterhalb der Einbauposition am Flugzeug. Danach wird der Aufnahmerahmen zusammen mit dem Fahrwerk durch den Betätigungsarm angehoben und präzise an die vorgesehenen Fixierpunkte des Flugzeugs manipuliert. Nach der Fixierung des Fahrwerks am Flugzeug wird der Aufnahmerahmen von dem Fahrwerk getrennt und dem Betätigungsarm am Boden abgesetzt.

Bei der Demontage eines Fahrwerks erfolgt der Vorgang in im wesentlichen entgegengesetzter Reihenfolge: der leere Aufnahmerahmen wird von schräg unten von dem Betätigungsarm an das Fahrwerk herangeführt und das Fahrwerk wird mit dem Aufnahmerahmen fest verbunden. Anschließend wird durch das Anheben des Aufnahmerahmens der Strut komprimiert und die Fixierpunkte am Flugzeug (z.B. Abbolzungen) durch die Kompensation des Fahrwerks-Gewichtes entlastet, so dass die Fixierungen gelöst werden können. Dann wird das auf dem Aufnahmerahmen montierte Fahrwerk auf den Boden abgesenkt. Danach fährt die Betätigungseinrichtung den beladenen Aufnahmerahmen schiebend oder ziehend auf die Lagerposition.

Wie bereits erwähnt, ist die Betätigungseinrichtung so ausgebildet, dass die Hub-/Gier- und Drehbewegungen, die zum Aus- und Einbau des Fahrwerks erforderlich sind, mit hoher Präzision ausgeführt werden können. Die Positionierung der Betätigungseinrichtung unter dem Fahrwerkschacht kann dabei ungenau erfolgen, da aufgrund der Beweglichkeit der Betätigungseinrichtung in allen Achsen eine präzise Positionierung nicht erforderlich ist. Weiterhin sollen die unterschiedlichen Anforderungen der unterschiedlichen Flugzeugtypen durch die universelle Beweglichkeit der Betätigungseinrichtung ausgeglichen werden können.

Die Betätigungseinrichtung kann bspw. fernsteuerbar, insbesondere drahtlos, ausgebildet sein. Eine Steuerungseinrichtung der Betätigungseinrichtung kann eine inverse Kinematik umfassen, d.h. die Bewegungen werden am Ort des Kopplungsadapters gesteuert und die Bewegungen des Betätigungsarms und der übrigen Antriebe/Stelltriebe werden davon abgeleitet und entsprechend nachgeführt. Teilbewegungen können im Sinne einer Bahnsteuerung auch automatisch abgerufen werden (robotische Steuerung).

Die Betätigungseinrichtung kann ein selbstfahrendes Fahrgestell aufweisen, welches eine Positionierung des Geräts ohne weitere Hilfsmittel ermöglicht. Wie bereits erwähnt, kann die Betätigungseinrichtung zudem (hydraulische) Stützarme bzw. Stützstreben umfassen, die nach einer Positionierung der Betätigungseinrichtung händisch oder automatisiert ausgezogen bzw. ausgeschwenkt und daran angebrachte Stützplatten abgesenkt werden, die die Plattform des Unterbaus auf dem Untergrund fest abstützen. Die Plattform bzw. der Unterbau können sich über Vertikalbewegungen der Stützplatten selbst (halbautomatisch) horizontal ausrichten. Alle weiteren Bewegungen können über auf der Plattform bzw. dem Unterbau montierte Baugruppen erfolgen.

Als Antriebseinheit für die Betätigungseinrichtung kann ein Elektroantrieb mit Akkumulator vorgesehen sein, der ein aus Hubzylindern bestehendes hydraulisches System betreibt. Alle Bewegungsachsen können mit sensorischen Abgriffen versehen sein, so dass alle Achsen im Sinne von Servo-Systemen fein geregelt werden können.

Weitere mögliche Sensoren können die Kräfte und Momente am Ort des Kopplungsadapters erfassen, so dass stets eine Kontrolle der auf die Anschlagspunkte des Fahrwerks wirkenden Kräfte und Momente möglich ist. Dabei sind die Geometrie des Aufnahmerahmens und der geometrische Bezug zu den Fixierpunkten des Fahrwerks am Flugzeug und zum Schwerpunkt des Fahrwerks zu berücksichtigen.

Alle Antriebe können über zweiseitig wirksame Hydraulikzylinder erfolgen. Die Drehachse der Teleskoparmanordnung kann (zusätzlich) noch über einen Zahnradantrieb verfügt, um einen großen Schwenkbereich zu ermöglichen. Die Feinbewegung der Drehachse kann jedoch spielfrei insbesondere über einen Hubzylinder, wenn auch über wenige Winkelgrade, erfolgen.

Das erfindungsgemäße kinematische Konzept ist so ausgelegt, dass die kardanartige Anlenkung am Betätigungsarm selbst nur Ausgleichsbewegungen aufnehmen soll, die Hauptantriebskräfte beim Anheben des Aufnahmerahmens jedoch durch die Teleskoparmanordnung aufgebracht werden. Zylinder am Kardan können deshalb relativ klein gehalten sein und sollen nur eingeschränkte Bewegungen ausführen.

Um die geforderte Präzision der Bewegung am Kopplungsadapter im Sub-Millimeterbereich einzuhalten, ist die gesamte Konstruktion mit hoher Steifigkeit auszulegen.

Die Bewegungsgeschwindigkeit in allen Achsen kann relativ niedrig gehalten werden, die erforderliche Antriebsleistung ist deshalb gering und kann aus einem Elektroantrieb gewonnen werden.

Die Steuerung der Achsen kann vorzugsweise rechnergesteuert erfolgen, wobei die zur Verfügung stehenden kinematischen Bewegungsräume und zulässigen Belastungen kontinuierlich (sensorisch) überwacht werden. Die Manipulation des Aufnahmerahmens soll feinfühlig und ergonomisch optimiert erfolgen, so dass auch komplexe Bewegungen einfach ausgeführt werden können.

Die Steuerung (bzw. Steuerungseinrichtung) kann insbesondere so ausgebildet sein, dass Drehungen um unterschiedliche Drehpunkte und unterschiedliche Drehachsen rechnerisch kompensiert möglich sind (Rotation um virtuelle Drehpunkte und Achsen). Hierzu werden zu diesen Drehpunkten Versätze (Distanzangaben) bezogen auf den Kardanmittelpunkt (Schwenktriebaufhängung) definiert. Die Drehpunkte können entweder im geräteseitigen Speicher verzeichnet und damit selektierbar sein oder sie können im Rahmen eines 3D-Messvorganges durch das Anfahren des Messpunkts mit der Spitze des Kopplungsadapters (mit aufgenommenem Messkopf) eingemessen werden. Alternativ können zwei fokussierbare Kameras jeweils an den vorderen Eckpunkten der Plattform des Unterbaus angebracht sein. Die Kameras können bspw. drahtlos mit einem tragbaren Interaktionsgerät, wie einem Industrie-Tablet, gekoppelt sein. Durch eine (berührungssensitive oder cursorgesteuerte) Markierung des Drehpunkts kann von jeder Kamera eine Entfernungsmessung durchgeführt werden. Die beiden Werte der Entfernungsmessungen können im Tablet angezeigt und bspw. mit einem einfachen Befehl an die Steuerung übermittelt werden.

Die an den Achsen des Kardans gemessenen Drehmomente und die daraus errechneten Lastwerte können dazu genutzt werden, die Kräfte am Fixierpunkt im Flugzeug mittels Sollvorgaben zu regeln (lastgesteuerter Betrieb). Eine entsprechende Regelung kann bspw. folgende Funktionalitäten ermöglichen: Kompensation des Eigengewichts des Fahrwerks (Lastfreiheit); Strut-Komprimierung (achsgerechte (bzgl. Fahrwerk) Bahnsteuerung zur Vermeidung von Seitenlasten); Aufbringen einer Vorlast (Eigengewicht Fahrwerk + Andrucckraft) .

Vordefinierte Bahnen und Bewegungen des Betätigungsarms können durch Selektion aus einem Sortiment abgerufen und ausgeführt werden (halbautomatischer Betrieb mit Bahnsteuerung). Die automatische Ausführung kann durch entsprechende optische und akustische Warnanzeigen den an der Montage beteiligten Personen signalisiert werden (Blinklicht, Tonsignal u.dgl.m.).

Weitere Vorteile und Ausgestaltungen der Erfindung ergeben sich aus den Unteransprüchen, der Beschreibung und der beiliegenden Zeichnung.

Die Erfindung ist anhand von Ausführungsbeispielen in der Zeichnung schematisch dargestellt und wird im folgenden unter Bezugnahme auf die Zeichnung ausführlich beschrieben.

### Kurzbeschreibung der Zeichnung

Figur 1 zeigt eine Betätigungseinrichtung einer erfindungsgemäßen Vorrichtung zum Ein- und Ausbau von Flugzeugfahrwerken in seitlicher schematischer Darstellung in Ruheposition.
Figur 2 zeigt die Betätigungseinrichtung der Figur 1 in einer ersten Ausfahrposition.
Figur 3 zeigt die Betätigungseinrichtung der Figuren 1 und 2 in einer zweiten Ausfahrposition.
Figur 4 zeigt die Betätigungseinrichtung der Figur 3 in Draufsicht.
Figur 5 zeigt einen Kopplungsadapter einer erfindungsgemäßen Vorrichtung zum Ein- und Ausbau von Flugzeugfahrwerken in perspektivischer Ansicht.
Figur 6 zeigt einen Aufnahmerahmen einer erfindungsgemäßen Vorrichtung zum Ein- und Ausbau von Flugzeugfahrwerken in perspektivischer Ansicht.
Figur 7 zeigt den Aufnahmerahmen der Figur 6 mit eingesetztem Kopplungsadapter der Figur 5.
Figur 8 zeigt den Aufnahmerahmen der Figur 7 mit einem darauf befestigten Flugzeugfahrwerk.
Figur 9 zeigt eine perspektivische Gesamtsicht der erfindungsgemäßen Vorrichtung zum Ein- und Ausbau von Flugzeugfahrwerken mit der Betätigungseinrichtung der Figuren 1 bis 4, dem Kopplungsadapter der Figur 5 und dem Aufnahmerahmen der Figuren 6 bis 8.

### Ausführliche Beschreibung

Gleiche und ähnliche in den einzelnen Figuren dargestellte Merkmale sind mit gleichen Bezugszeichen bezeichnet.

Die im folgenden anhand eines Ausführungsbeispieles näher erläuterte Erfindung betrifft eine Vorrichtung zum Ein- und Ausbau von Flugzeugfahrwerken 10, im folgenden auch kurz als "Montagevorrichtung" oder auch nur "Vorrichtung" bezeichnet.

Die Montagevorrichtung 10 umfasst erfindungsgemäß eine Betätigungseinrichtung 100, einen Aufnahmerahmen 200 sowie einen Kopplungsadapter 300, wie sie nachfolgend näher beschrieben werden.

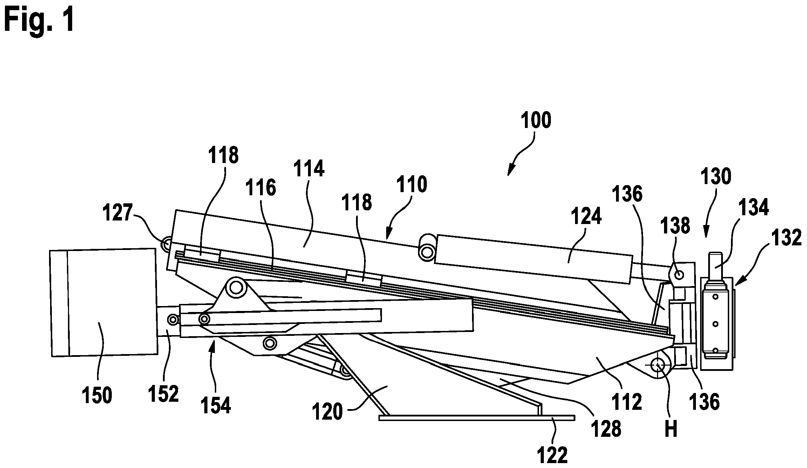

Die Figuren 1 bis 4 veranschaulichen in seitlicher schematischer Darstellung Aufbau und Funktionsweise einer erfindungsgemäßen Betätigungseinrichtung 100.

Die Betätigungseinrichtung 100 umfasst einen Betätigungsarm 110. In dem dargestellten Ausführungsbeispiel ist der Betätigungsarm 110 als Teleskoparmanordnung ausgebildet und umfasst einen unteren Hauptarm 112, auf dem ein ausfahrbarer Teleskoparm 114 angeordnet ist. Der Teleskoparm 114 ist gegenüber dem Hauptarm 112 auf einer Linearführung (Linearschiene) 116, in der er mittels Schlitten 118 gelagert ist, verfahrbar. Die Linearführung kann als einzelne, insbesondere zentrale, Führung ausgebildet sein, oder - wie in dem dargestellten Ausführungsbeispiel - als Doppelschiene links und rechts von dem Teleskoparm 114.

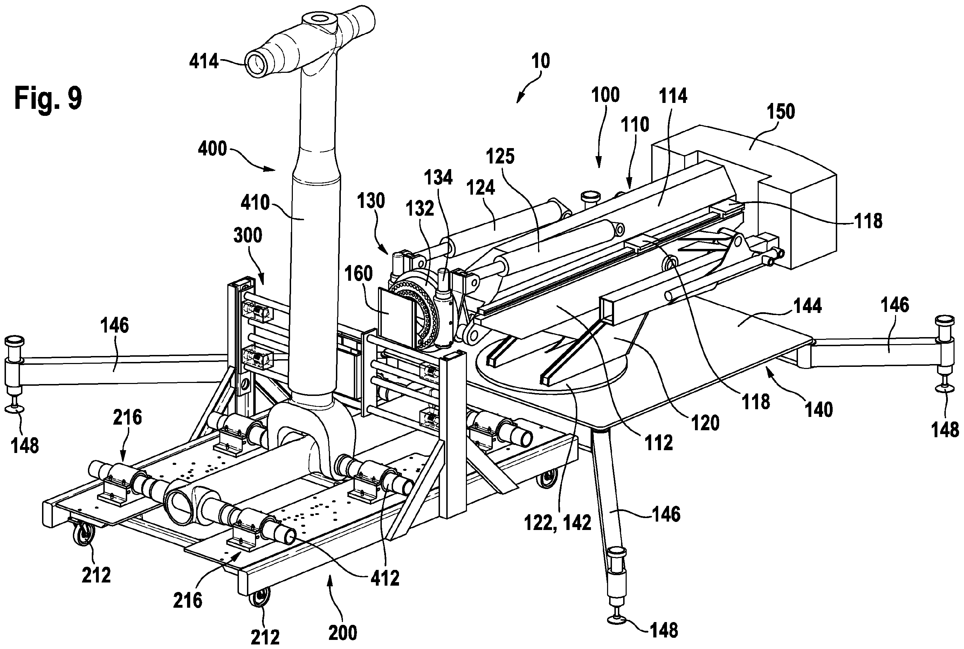

Der Hauptarm 112 ist mittels eines Trägerarms 120 und einer an einem unteren Ende des Trägerarms 120 angebrachten Trägerplatte 122 auf einem Unterbau 140 montiert (vgl. Figur 9). Der Aufbau des Betätigungsarms 110 auf dem Unterbau 140 erfolgt erfindungsgemäß drehend, bspw. mittels eines Drehkranzes 142, auf den die Trägerplatte 122 als Drehkranzauflage drehfest montiert ist.

Der Drehkranz 142 wiederum ist in dem dargestellten Ausführungsbeispiel in eine Plattform 144 des Unterbaus 140 integriert. Der Unterbau 140 umfasst des weiteren (vier) ausfahrbare Stützarme 146, an deren Enden sich in an sich bekannter Art und Weise absenkbare Stützplatten 148 befinden. Der Unterbau 140 umfasst des weiteren vorzugsweise ein (nicht dargestelltes) selbstfahrendes Fahrgestell, das bspw. omnidirektionale Räder umfassen kann.

Die Betätigungseinrichtung 100 umfasst des weiteren ein Ausgleichsgewicht 150. Das Ausgleichsgewicht 150 ist derart ausgestaltet, dass es gegenläufig mit einer Armbewegung des Betätigungsarms 110 in Gegenrichtung (in der Darstellung der Figuren 1 bis 4 nach links) ausrückt. Hierfür kann das Ausgleichsgewicht 150 bspw. wie dargestellt mittels einer Linearschienenanordnung 152/154 angebracht sein. Zur Übertragung der Verstellkraft sind Stellzylinder 156 vorgesehen.

An einem Funktionsende des Teleskoparms 114 umfasst die Betätigungseinrichtung 100 des weiteren ein kardanartiges Betätigungselement 130 mit mehreren Freiheitsgraden der Bewegung, das zur Ankopplung an den Aufnahmerahmen 200 mittels dem Kopplungsadapter 300 ausgebildet ist und zur Feinpositionierung im Betrieb der erfindungsgemäßen Montagevorrichtung 10 dient.

Das Betätigungselement 130 kann wie in dem dargestellten Ausführungsbeispiel als zentrales Element einen Schwenktrieb 132 umfassen, bei dem es sich um einen Präzisionsdrehantrieb mit zwei ineinander gesetzten Kränzen und integrierten Schneckenmotoren 134 handelt. Zur Erzielung der gewünschten Freiheitsgrade der Bewegung ist der Schwenktrieb 132 kipp- und schwenkbar an dem Funktionsende des Teleskoparms 114 gelagert. Hierfür ist der Schwenktrieb 132 um eine Vertikalachse V drehbar an einem Halterungselement 136 angeordnet. Das Halterungselement 136 wiederum ist um eine Horizontalachse H verschwenkbar an dem Funktionsende des Teleskoparms 114 angelenkt. Des weiteren sind Feinstellzylinder 124, 125 vorgesehen, die beidseits einerseits (an dem Teleskoparm 114 angelenkt sind und andererseits an Anlenkpunkten 138 des Halterungselements 136 angreifen. (N.B.: in den Darstellungen der Figuren ist die konkrete Anlenkung der Feinstellzylinder 124, 125 an dem Teleskoparm 114 aus Gründen der Übersichtlichkeit nicht explizit eingezeichnet.)

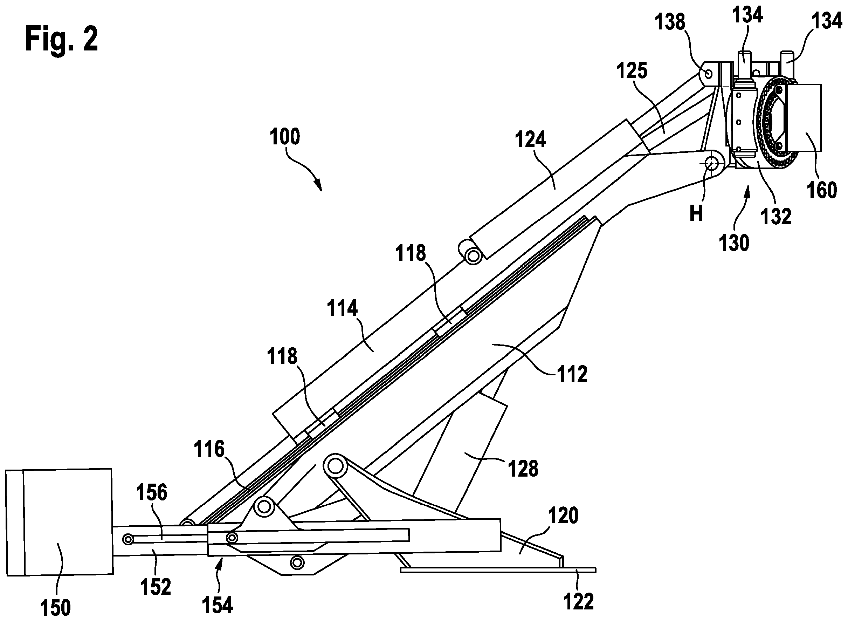

An das Betätigungselement 130 ist - wie in den Figuren 2 bis 4 stark schematisch angedeutet - eine Kopplungsplatte 160 angebracht. In dem dargestellten Ausführungsbeispiel kann diese Kopplungsplatte 160 insbesondere mittels einer drehsteifen Verbindung an dem Innenkranz des Schwenktriebs 132 angebracht sein. Die Kopplungsplatte 160 kann bspw. lösbar/austauschbar ausgebildet sein, bspw. mittels Schnappbolzen. Sie kann aber auch dauerhaft an dem Betätigungselement 130 befestigt sein.

Zum Ermitteln der Drehmomente an dem Betätigungselement 130 kann ein Dreiachskraftsensor vorgesehen sein, bspw. um die Drehkranzachse des Betätigungselements.

Der Hauptarm 112 der Betätigungseinrichtung 100 ist mittels eines Hubzylinders 128 gegenüber der Trägerplatte 122 um eine Anlenkachse 129 an dem Trägerarm 120 aufstellbar. Zum Verfahren des Teleskoparms 114 entlang der Linearführung 116 ist ein Teleskoparmzylinder 126 vorgesehen, der mittig zwischen den Linearschienen 116 angeordnet und bei 127 an dem Hauptarm 112 angelenkt ist.

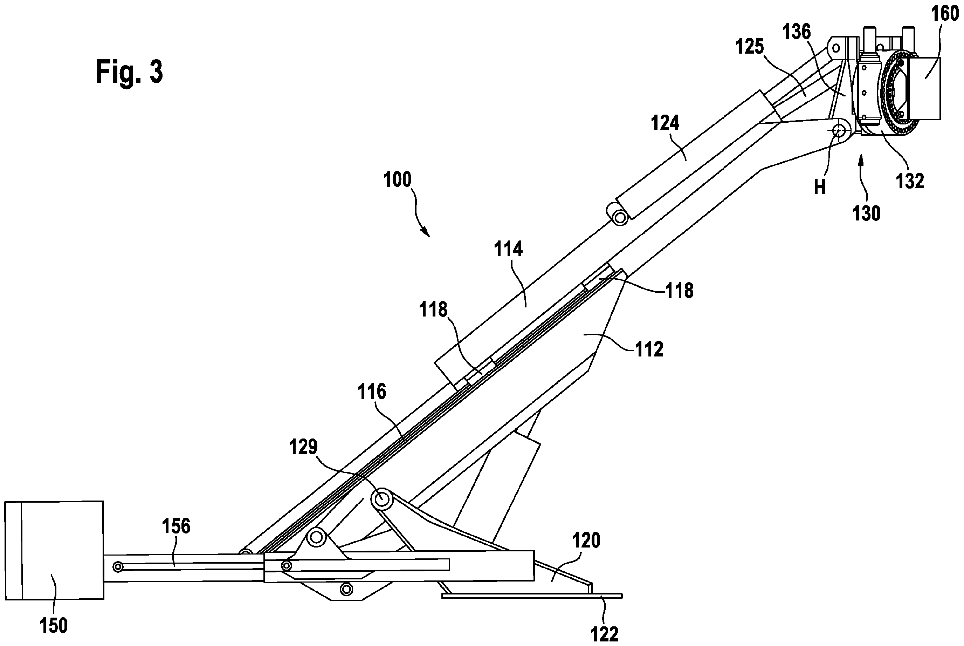

Die gegenläufige Verstellung des Ausgleichsgewichts 150 ist in der Abfolge der Figuren 1 bis 3 veranschaulicht: in dem Maße, wie der Hauptarm 112 mittels des Hubzylinders 128 aufgestellt (in den Darstellungen der Figuren 2 und 3 um ca. 40°) und der Teleskoparm 114 zunehmend ausgefahren wird, wird auch das Ausgleichsgewicht 150, gesteuert durch den Stellzylinder 156, entlang der Linearschienenanordnung 152, 154 zum Gewichtsausgleich nach hinten (also in entgegengesetzte Richtung zum Teleskoparm 114) ausgefahren.

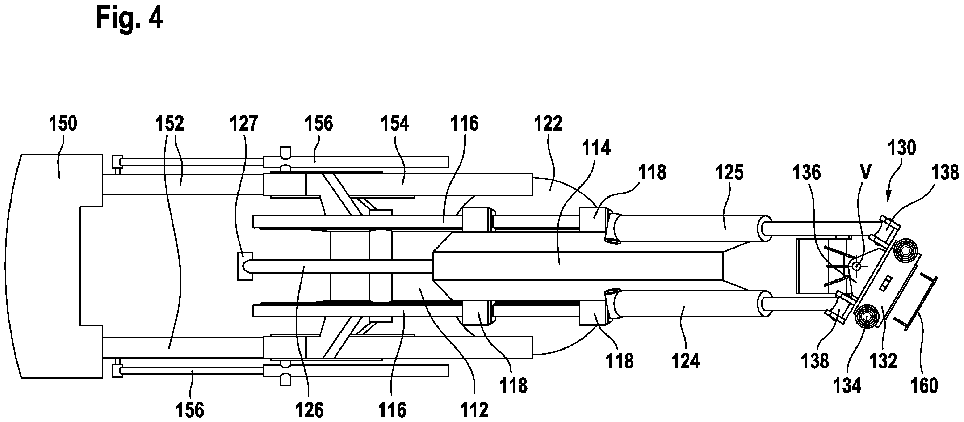

Die Figuren 2 bis 4 veranschaulichen zudem eine Verschwenkung des Schwenkbetriebs 132 um die Vertikalachse V. Diese wird durch eine gegenläufige Verstellung der Feinstellzylinder 124, 125 bewirkt. In der in den Figuren gezeigten Verstellposition wird der in den Figuren 2 und 3 im Vordergrund befindliche Feinstellzylinder 124 etwas eingefahren, während der im Hintergrund befindliche Feinstellzylinder 125 (in der Darstellung der Figur 4 der obere Zylinder) ausgefahren wird. Dadurch erfolgt eine Verschwenkung des Schwenkbetriebs 132 um die Vertikalachse V zum Betrachter hin (Figuren 2 und 3). Eine (nicht dargestellte) Verschwenkung des Schwenktriebs um die Horizontalachse H wird durch Ausfahren beider Feinstellzylinder 124, 125 erwirkt, eine Überlagerung beider Schwenkrichtungen (also um beide Achsen H, V) wird durch ungleichmäßiges Ausfahren beider Feinstellzylinder 124, 125 erwirkt.

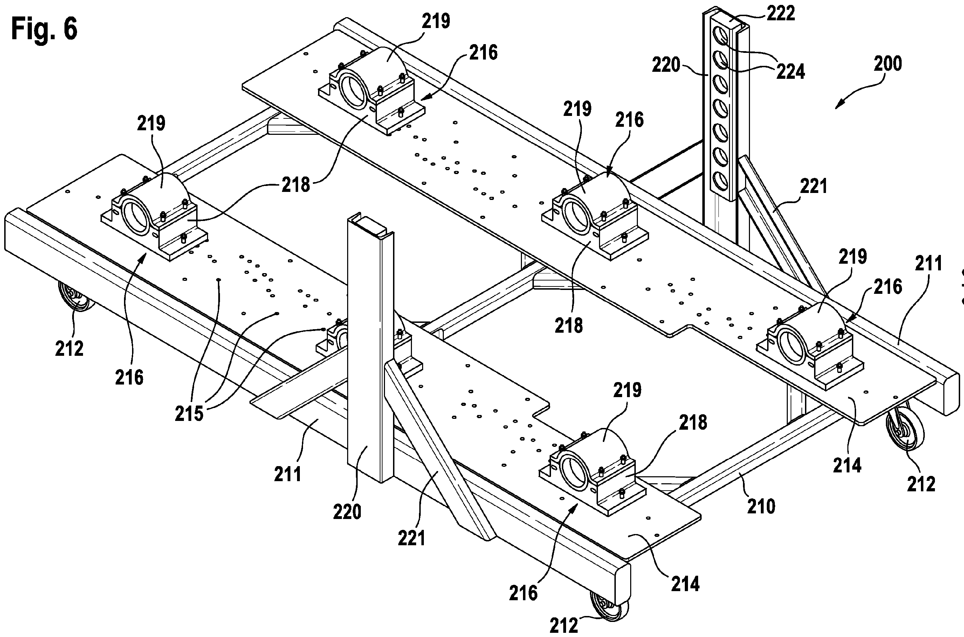

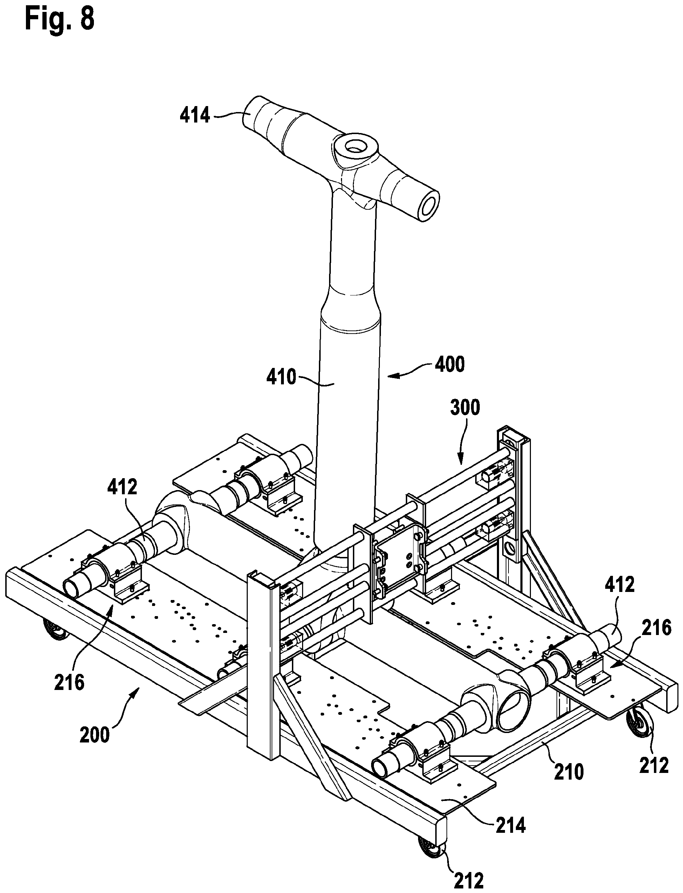

Der Aufnahmerahmen 200 (Figur 6) besteht im wesentlichen aus einem Trägerrahmen 210 mit (passiven) Rollen 212 und mit auf dem Trägerrahmen 210 angeordneten Plattenelementen 214. Die Plattenelemente 214 verfügen über eine Vielzahl von Adapterlöchern 215, die an vorgegebenen Positionen unter Berücksichtigung der Geometrien unterschiedlicher aufzunehmender Flugzeugfahrwerke vorgesehen sind, um Aufnahmeelemente 216 je nach Fahrwerktyp passend einzusetzen. In dem dargestellten Ausführungsbeispiel sind die Aufnahmeelemente 216 als zweiteilige Klemm- bzw. Spannhalterungen umfassend untere Aufnahmeschuhe 218 und auf die Aufnahmeschuhe 218 (nach eingesetztem Fahrwerk) aufzusetzende Klemmhalbschalen 219 (vgl. auch Figur 8).

Der Aufnahmerahmen 200 umfasst des weiteren zwei Kopplungsschienen 220, die sich in dem dargestellten Ausführungsbeispiel im wesentlichen vertikal an dem Aufnahmerahmen 200 nach oben erstrecken. Die Kopplungsschienen 220 können, wie dargestellt, bspw. an zeitlichen Längsschienen 211 des Trägerrahmens 210 befestigt sein. Zur Erhöhung der Steifigkeit können Querstreben 221 vorgesehen sein. Alternative Befestigungsarten und auch andere Ausgestaltungen der Kopplungselemente an dem Aufnahmerahmen erschließen sich dem Fachmann ohne weiteres.

Die Kopplungsschienen 220 sind als U-förmige Längsträger ausgebildet, die jeweils eine Lochstange 222 aufnehmen. Die Lochstange 222 verfügt über eine Quader förmige Grundstruktur, mit der sie in der jeweiligen Kopplungsschiene 220 in das Profil eingebracht ist, und weist eine Anzahl von über die Längserstreckung der Stange verteilten Löchern 224 auf. Die Kopplungsschienen 220 sind derart an Längsseiten des Aufnahmerahmens 200 angebracht, dass sich die Lochstangen 222 und deren Löcher 224 bezüglich einer längs mit Ebene des Aufnahmerahmens 200 genau gegenüber liegen.

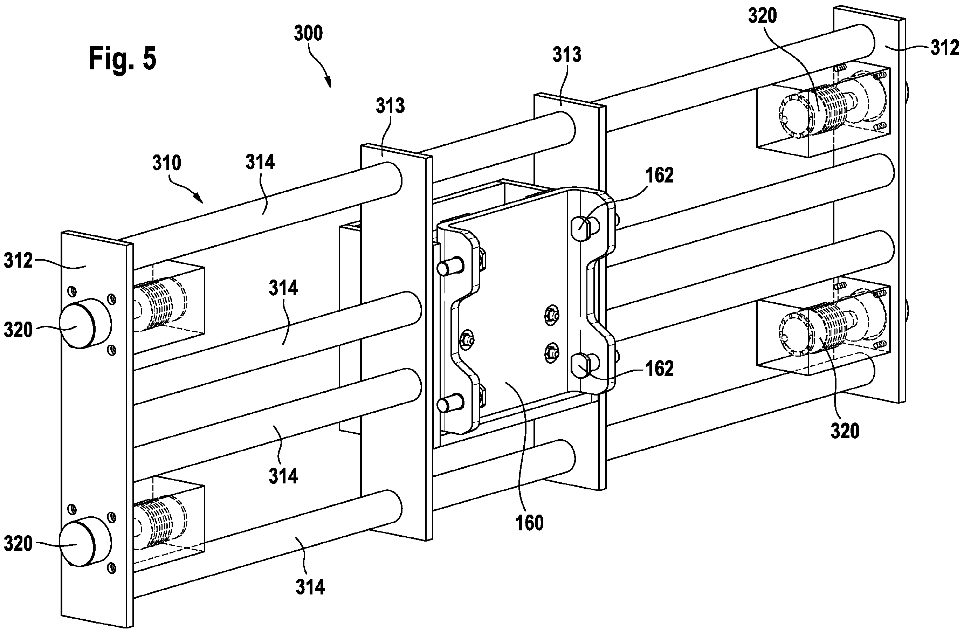

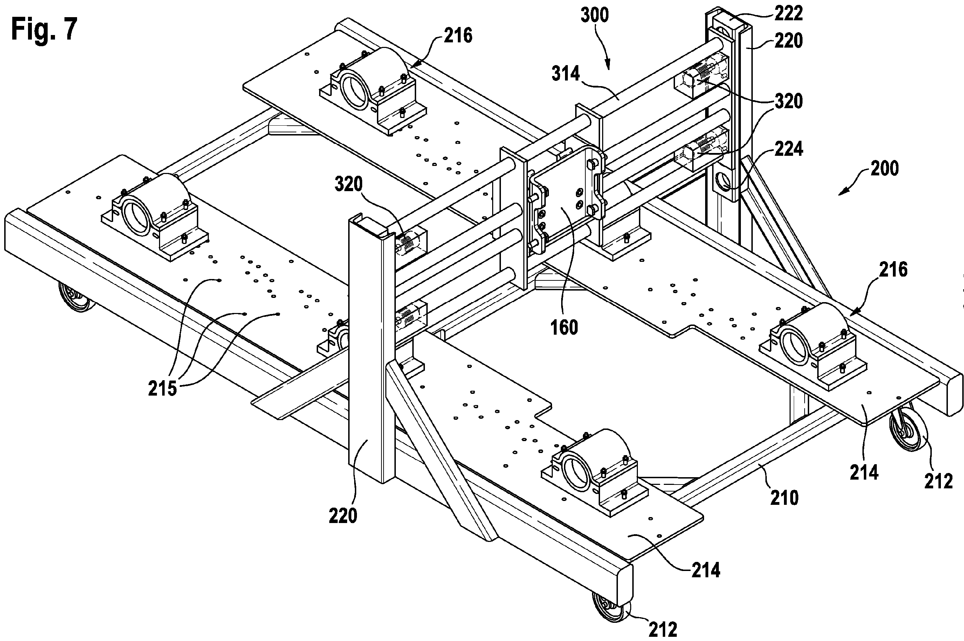

Die Löcher 224 sind so bemessen, dass Fixierbolzen 320 des Kopplungsadapter des 300 bei korrekter Ausrichtung des Kopplungsadapters passgenau in die Löcher 224 eingreifen können, wie dies nachfolgend noch beschrieben wird (vgl. auch Figuren 5 und 7).

Der Kopplungsadapter 300 (Figur 5) umfasst ein stabiles rahmenartiges Grundgerüst 310, dass in dem dargestellten Ausführungsbeispiel zwei außenliegende Vertikalplatten 312 umfasst, an denen die als Auszugsbolzen ausgebildeten Fixierbolzen 320 angeordnet sind. Die beiden außenliegenden Vertikalplatten 312 sind durch vier beabstandet zueinander parallel verlaufende Querstangen 314 miteinander verbunden. Zur Erhöhung der Stabilität sind in einem mittleren Abschnitt zwischen den beiden außenliegenden Vertikalplatten 312 beabstandet zueinander zwei innenliegende Vertikalplatten 313 vorgesehen. Die beiden inneren Querstangen 314 können durchgehend oder nicht-durchgehend (wie in dem dargestellten Ausführungsbeispiel) ausgebildet sein.

Es kann vorgesehen sein, an dem Kopplungsadapter ggf. unterschiedliche Zusatzaggregate, z.B. aktive Greifer, Kranhaken, mechanische Adapter, Kamera, Sensorik u.a. anschließen zu können. Diese Zusatzaggregate können elektrisch aktiv sein und über eine hydraulische Achse verfügen. Um die elektrische Verbindung herstellen zu können, sind an dem Kopplungsadapter mindestens 1 elektrischer Rundstecker und 2 Steckverbindungen für eine hydraulische Achse (Zylinder) vorzusehen. Die elektrische Steckverbindung kann den Anschluss von mehreren Sensoren, u.a. auch eines bildgebenden Sensors (z.B. USB), aber auch eines elektrischen Antriebs von max. 1 kW, 24 V DC ermöglichen. Die erforderlichen Kontrollvorrichtungen für diese Zusatzaggregate können in der Steuerung (bzw. Steuerungseinrichtung) vorgesehen sein.

In der Darstellung der Figuren 5, 7 und 8 ist an dem Kopplungsadapter 300 zur Veranschaulichung die bereits voranstehend beschriebene Kopplungsplatte 160 eingezeichnet. In dem dargestellten Ausführungsbeispiel der Kopplungsplatte 160 sind an seitlichen Abtragung angebrachte Spannbolzen 162 eingezeichnet, mit denen die Kopplungsplatte 160 - wie bereits voranstehend erläutert - lösbar an dem Betätigungselement 130 des Betätigungsarms 110 befestigt werden kann. Die Darstellung der Kopplungsplatte 160 an dem Kopplungsadapter 300 dient lediglich zur Veranschaulichung - im Betrieb der erfindungsgemäßen Montagevorrichtung ist die Kopplungsplatte 160 an dem Betätigungselement 130 des Betätigungsarms 110 befestigt, damit der Betätigungsarm 110 mit Hilfe der Kopplungsplatte 160 an dem Kopplungsadapter 300 angreifen und an diesem einklinken kann, um ihn aufzunehmen. Hierzu ist in dem dargestellten Ausführungsbeispiel der Bereich zwischen den beiden inneren Vertikalplatten 313 vorgesehen. Die Kopplungsplatte 160 kann zu diesem Zweck auf einer dem Kopplungsadapter 300 zugewandten Seite (nicht dargestellt) hakenartige Vorsprünge aufweisen, mit denen die Kopplungsplatte 160 in Schrägstellung mit dazu vorgesehenen Vorsprüngen an dem Kopplungsadapter 300 eingreifen kann, um dann um die durch den Eingriff erzeugte Schwenkachse nach und schwenkend in gleichfalls zu diesem Zwecke vorgesehene ein Schnappelemente eingreifen kann. Dem Fachmann erschließen sich alternative Möglichkeiten der Ausgestaltung des Ankopplungsmechanismus zwischen dem Betätigungsarm und dem Kopplungsadapter ohne weiteres.

Figur 7 zeigt den Aufnahmerahmen 200 der Figur 6 mit darin eingesetztem Kopplungsadapter 300 der Figur 5. der Kopplungsadapter 300 ist insbesondere so ausgestaltet, dass er in sich stabil genug ist, um die Lastübertragung zwischen Betätigungsarm 110 und beladenem Aufnahmerahmen 200 bewerkstelligen zu können, und darüber hinaus auch zur weiteren Erhöhung der Verbindungssteifigkeit des Aufnahmerahmens 200 beiträgt.

Im Betrieb nimmt der Betätigungsarm 110 wie bereits beschrieben mittels der Kopplungsplatte 160 den sich bspw. in einer Ruhehalterung befindlichen Kopplungsadapter 300 auf. Dann positioniert sich die fahrbare (selbst fahrende) Betätigungseinrichtung 100 mit dem aufgenommenen Kopplungsadapter 300 vor dem Aufnahmerahmen 200. Daraufhin wird der Betätigungsarm 110 so betätigt, dass der Kopplungsadapter 300 in die Zielposition zwischen den beiden in den Kopplungsschienen 220 angeordneten Lochstangen 222 geführt wird. Zur Bestimmung der exakten Position können in an sich bekannter Art und Weise bspw. Referenzmarkierungen vorgesehen sein. Nach Erreichen der Zielposition werden die Fixierbolzen 320 ausgefahren und in die dazu vorgesehenen Löcher 224 eingeführt. Nun kann die Betätigungseinrichtung 100 in Aufnahmerahmen 200 bewegen, sei es durch Schieben/Ziehen auf den Rollen 212, sei es durch anheben und positionieren mittels der Grobpositionierungselemente und Feinpositionierungselemente der Betätigungseinrichtung 100.

Figur 8 zeigt den Aufnahmerahmen 200 mit darin eingesetztem Kopplungsadapter 300 der Figur 7 mit einem auf dem Aufnahmerahmen 200 gehalterten Flugzeugfahrwerk 400. Das Flugzeugfahrwerk 400 wird ohne Räder in dem Aufnahmerahmen 200 aufgenommen. Das Flugzeugfahrwerk 400 umfasst ein Fahrwerkbein 410, an dem in dem dargestellten Ausführungsbeispiel drei Fahrwerkachsen 412 befestigt sind. Die Aufnahme und Halterung in dem Aufnahmerahmen 200 erfolgt über die Fahrwerkachsen 412, indem diese in den Aufnahmeelementen 216 aufgenommen und festgeklemmt werden. An seinem gegenüberliegenden oberen Ende weist das Flugzeugfahrwerk 400 einen Zapfen 414 auf.

Figur 9 schließlich zeigt eine perspektivische Gesamtansicht der erfindungsgemäßen Montagevorrichtung 10 mit dem beladenen Aufnahmerahmen 200 der Figur 8 und der frontal vor dem Kopplungsadapter 300 positionierten und ausgerichteten Betätigungseinrichtung 100 kurz vor dem Einklinken der Kopplungsplatte 160 in den Kopplungsadapter 300 (bzw. kurz nach deren Ausklinken).

Mit der erfindungsgemäßen Betätigungseinrichtung sind die folgenden sechs Freiheitsgrade der Bewegung realisiert: Rotation um den Drehkranz des Unterbaus (Vertikalachsendrehung des Betätigungsarms); Aufstellen des Betätigungsarms (Betätigungsarm-Winkel); Ausfahren des Teleskoparms; Rotation des Schwenktriebs; Kippen des Schwenkbetriebs (um Horizontalachse H); Schwenken des Schwenkbetriebs (um Vertikalachse V). Dies kann ergänzt werden durch einen fahrbaren Unterbau der Betätigungseinrichtung sowie durch evtl. Zusatzaggregate.

Die Grobpositionierungselemente der Erfindung umfassen ggf. den fahrbaren Unterbau der Betätigungseinrichtung, den Drehkranz des Unterbaus (Zahnkranz) und den Hubzylinder/Aufstellzylinder des Hauptarms 112. Die Feinpositionierungselemente umfassen den Teleskoparmzylinder zum Verstellen des Teleskoparms und die Feinstellzylinder zum Schwenken/Kippen des Schwenktriebs sowie die Drehbewegung des Schwenktriebs. Bei schnellem Betrieb des Teleskoparmzylinders kann dieser zusätzlich auch zu den Grobpositionierungselementen zählen. An dem Drehkranz des Unterbaus (Zahnkranz) kann ggf. zusätzlich ein kleiner Stellzylinder zur Feinjustierung der Drehbewegung in einem feineren Maß, als dies durch den Zahnkranz möglich ist, vorgesehen sein.

Die Erfindung ermöglicht eine hochpräzise Handhabung von Flugzeug Fahrwerken bei deren Ein- bzw. Ausbau aufgrund der Kombination von Grobpositionierungselementen und Feinpositionierungselementen in einer Betätigungseinrichtung. Für eine umfassende rechnergesteuerte Bewegung, vorzugsweise in unterschiedlichen Betriebsmodi, verfügt die erfindungsgemäße Vorrichtung über eine Vielzahl von Sensoren. Die Grobpositionierung erfolgt bspw. manuell mittels einer Fernsteuerung durch Einstellung des Betätigungsarms (Verfahren des Unterbaus, Drehung, Winkelverstellung, Grobeinstellung durch Ausfahren des Teleskoparms). Die Feinpositionierung kann gleichfalls manuell mittels einer Fernsteuerung erfolgen, vorzugsweise in einer Langsam-Gangart. Alternativ kann die Feinpositionierung vollautomatisch Rechner gesteuert erfolgen.

Erfindungsgemäß kann eine rechnerbasierte Steuerung der Montagevorrichtung so ausgebildet sein, dass die Betätigungseinrichtung so gesteuert wird, dass eine Drehung des Aufnahmerahmens um einen beliebig festlegten Drehpunkt bzw. eine beliebig festlegbare Drehachse außerhalb der Betätigungseinrichtung erfolgt. Die "virtuellen" Drehachsen können dabei bspw. durch die Vertikalachse des Fahrwerkbeins, die Horizontalachse des Fahrwerkzapfens oder durch eine der Fahrwerkachsen verlaufen. Ein möglicher "virtueller" Drehpunkt kann bspw. der Schnittpunkt zwischen der Vertikalachse des Fahrwerkbeins und der horizontalen Hauptachse des Fahrwerks (Achsmittelpunkt des Fahrwerks) sein.

Die erfindungsgemäße Montagevorrichtung kommt zum Einsatz, nachdem das Flugzeug mit Hilfe von Dreibockheberns angehoben/aufgebockt und die Räder und Bremsen des auszubauenden Flugzeugfahrwerks demontiert wurden. Die Betätigungseinrichtung hebt an, positioniert und orientiert den leeren Aufnahmerahmen der Art, dass die Fahrwerkachsen des auszubauenden Flugzeugfahrwerks in den Halbschalen/Aufnahmeschuhen des Aufnahmerahmens zu liegen kommen. Die Fahrwerkachsen werden dann mittels den aufgesetzten Klemmschalen/Klemmschellen fixiert. Durch (leichtes) lastkontrolliertes Anheben des Aufnahmerahmens erfolgt die notwendige Strut-Kompression; dann erfolgt eine Fixierung dieser Position. Daraufhin führt die Betätigung Einrichtung eine Eigenkalibrierung zur Bestimmung des fahrwerkinduzierten Lastvektors durch und das Fahrwerk wird entlang des ermittelten Lastvektors angehoben, bis eine Lastfreiheit an der Stelle des Verbindungsbolzens zwischen Fahrwerk und Flugzeug erreicht ist. Nach dem Entfernen des Verbindungsbolzens wird der Aufnahmerahmen mit dem darauf fixierten Flugzeugfahrwerk abgesenkt und von der Betätigungseinrichtung an einen Zielort gefahren. Zum Einbau wird in umgekehrter Reihenfolge verfahren. Dabei hebt die Betätigungseinrichtung den Aufnahmerahmen mit dem darauf fixierten Flugzeugfahrwerk an und positioniert es so, dass es mit den Anschlusspassungen zum Flugzeug ausgerichtet ist. Nach Einsetzen des Verbindungsbolzens erfolgt wiederum die Eigenkalibrierung zur Bestimmung des fahrwerkinduzierten Lastvektors und ein Absenken des Aufnahmerahmens entlang des errechneten Lastvektors nach dem Entfernen der Klemmschellen an den Achsen des Flugzeugfahrwerks.

### Bezugszeichenliste

- 10: Vorrichtung zum Ein- und Ausbau von Flugzeugfahrwerken
- 100: Betätigungseinrichtung
- 110: Betätigungsarm
- 112: Hauptarm
- 114: Teleskoparm
- 116: Linearführung/Linearschiene
- 118: Schlitten
- 120: Trägerarm
- 122: Trägerplatte
- 124: Feinstellzylinder
- 125: Feinstellzylinder
- 126: Teleskoparmzylinder
- 127: Anlenkpunkt am Hauptarm
- 128: Hubzylinder
- 129: Anlenkachse
- 130: Betätigungselement
- 132: Schwenktrieb
- 134: Schneckenmotoren
- 136: Halterungselement
- 138: Anlenkpunkte
- 140: Unterbau
- 142: Drehkranz
- 144: Plattform
- 146: Stützarm/Stützstrebe
- 148: Stützplatte
- 150: Ausgleichsgewicht
- 152: Linearschienenanordnung
- 154: Linearschienenanordnung
- 156: Stellzylinder
- 160: Kopplungsplatte
- 162: Spannbolzen
- 200: Aufnahmerahmen
- 210: Trägerrahmen
- 211: Seitliche Längsschienen
- 212: Rollen
- 214: Plattenelemente
- 215: Adapterlöcher
- 216: Aufnahmeelemente
- 218: Aufnahmeschuhe
- 219: Klemmhalbschalen
- 220: Kopplungsschienen
- 221: Querstreben
- 222: Lochstangen
- 224: Löcher
- 300: Kopplungsadapter
- 310: Grundgerüst
- 312: Außenliegende Vertikalplatten
- 313: Innenliegende Vertikalplatten
- 314: Querstangen
- 320: Fixierbolzen
- 400: Flugzeugfahrwerk
- 410: Fahrwerkbein
- 412: Fahrwerkachsen
- 414: Zapfen
- H: Horizontalachse
- V: Vertikalachse

## Patentansprüche

1. Vorrichtung (10) zum Ein- und Ausbau von Flugzeugfahrwerken (400), mit
- einer Betätigungseinrichtung (100) und
- einem Aufnahmerahmen (200), der einstellbare Aufnahmeelemente (216) zur Aufnahme unterschiedlicher Flugzeugfahrwerke umfasst,
wobei die Betätigungseinrichtung (100) einen auf einem Unterbau (140) verstellbar angebrachten Betätigungsarm (110) umfasst, der dazu ausgebildet ist, mittels eines Kopplungsadapters (300) an den Aufnahmerahmen (200) anzukoppeln und diesen mittels Grobpositionierungselementen und Feinpositionierungselementen in eine gewünschte Fahrwerk-Montageposition zu bewegen, **dadurch gekennzeichnet, dass** die Vorrichtung (10) ein gegenläufig zu einer Armbewegung des Betätigungsarms (110) ausrückbar ausgestaltetes Ausgleichsgewicht (150) aufweist.

2. Vorrichtung (10) nach Anspruch 1, mit einer rechnerbasierten Steuerung, die dazu ausgebildet ist, die Betätigungseinrichtung (100) derart zu steuern, dass eine Drehung des Aufnahmerahmens (200) um einen beliebig festlegbaren Drehpunkt bzw. eine beliebig festlegbare Drehachse außerhalb der Betätigungseinrichtung erfolgt.

3. Vorrichtung (10) nach Anspruch 2, bei der eine Definition der beliebig festlegbaren Drehpunkte bzw. Drehachsen durch Distanzangaben zu einem Mittelpunkt eines kardanartig gelagerten Feinpositionierungselements erfolgt, oder bei der die beliebig festlegbaren Drehpunkte bzw. Drehachsen aus einem Speicher der rechnerbasierten Steuerung fahrwerktypabhängig auswählbar sind.

4. Vorrichtung (10) nach Anspruch 2 oder 3, deren Steuerung ausgehend von an den Achsen eines kardanartig gelagerten Feinpositionierungselements gemessenen Drehmomenten zugehörige Lastwerte berechnet und hierauf basierend durch Sollwertabgleich die Kräfte an einem Montage-Fixierpunkt im Flugzeug regelt.

5. Vorrichtung (10) nach einem der Ansprüche 2 bis 4, deren Steuerung zur Durchführung einer Eigenkalibrierung zur Bestimmung des fahrwerkinduzierten Lastvektors und zu einem Anheben des Fahrwerks entlang des ermittelten Lastvektors bis zum Erreichen einer Lastfreiheit an der Stelle des Verbindungsbolzens zwischen Fahrwerk und Flugzeug ausgebildet ist.

## Claims

1. Apparatus (10) for the fitting and dismantling of aircraft landing gear (400), with
- an actuating device (100), and
- a receiving frame (200) which comprises adjustable receiving elements (216) for receiving different aircraft landing gear,
the actuating device (100) comprising an actuating arm (110) which is attached adjustably on a substructure (140) and is configured to couple by means of a coupling adapter (300) to the receiving frame (200) and to move the latter by means of rough positioning elements and precision positioning elements into a desired landing gear mounting position, **characterized in that** the apparatus (10) has a counterweight (150) which is configured such that it can be moved out in the opposite direction to an arm movement of the actuating arm (110).

2. Apparatus (10) according to Claim 1, with a computer-based controller which is configured to control the actuating device (100) in such a way that a rotation of the receiving frame (200) takes place about a pivot point which can be fixed as desired or a rotational axis which can be fixed as desired outside the actuating device.

3. Apparatus (10) according to Claim 2, in the case of which a definition of the pivot points or rotational axes which can be fixed as desired takes place by way of distance measurements from a centre point of a precision positioning element which is mounted in a gimbal-like manner, or in the case of which the pivot points or rotational axes which can be fixed as desired can be selected in a manner dependent on the landing gear type from a memory of the computer-based controller.

4. Apparatus (10) according to Claim 2 or 3, the controller of which calculates associated load-bearing values based on torques which are measured at the axes of a precision positioning element which is mounted in a gimbal-like manner, and, based on this, regulates the forces at a mounting fixing point in the aircraft by way of target value comparison.

5. Apparatus (10) according to one of Claims 2 to 4, the controller of which is configured to carry out a self-calibration in order to determine the landing gear-induced load vector and to raise the landing gear along the determined load vector until a freedom from load is reached at the location of the connecting bolt between the landing gear and the aircraft.

## Revendications

1. Dispositif (10) de montage et de démontage de trains d'atterrissage d'avion (400), ledit dispositif comprenant
- un moyen d'actionnement (100) et
- un cadre de réception (200) qui comprend des éléments de réception réglables (216) destinés à recevoir de différents trains d'atterrissage d'avion,
le moyen d'actionnement (100) comprenant un bras d'actionnement (110) qui est monté de manière réglable sur une infrastructure (140) et qui est conçu pour être accouplé, à l'aide d'un adaptateur d'accouplement (300), au cadre de réception (200) et pour déplacer celui-ci à une position de montage de train d'atterrissage souhaitée à l'aide d'éléments de positionnement grossier et d'éléments de positionnement fin, **caractérisé en ce que** le dispositif (10) comporte un contrepoids (150) adapté pour être débrayable dans le sens opposé à un mouvement du bras d'actionnement (110) .

2. Dispositif (10) selon la revendication 1, comprenant une commande informatisée qui est conçue pour commander le moyen d'actionnement (100) de manière à ce que le cadre de réception (200) effectue une rotation sur un point de rotation définissable de manière quelconque ou d'un axe de rotation définissable de manière quelconque à l'extérieur du moyen d'actionnement.

3. Dispositif (10) selon la revendication 2, dans lequel les points de rotation ou les axes de rotation définissables de manière quelconque sont définis par spécification de la distance à un point central d'un élément de positionnement fin de type Cardan, ou dans lequel les points de rotation ou les axes de rotation définissables de manière quelconque peuvent être sélectionnés dans une mémoire de la commande informatisée en fonction du type de train d'atterrissage.

4. Dispositif (10) selon la revendication 2 ou 3, dont la commande calcule des valeurs de charge associées à partir de couples mesurés sur les axes d'un élément de positionnement fin monté à cardan et, sur cette base, régule les forces en un point de fixation de montage dans l'avion par comparaison de valeurs de consigne.

5. Dispositif (10) selon l'une des revendications 2 à 4, dont la commande est conçue pour effectuer un auto-étalonnage afin de déterminer le vecteur de charge induit par le train d'atterrissage et pour soulever le train d'atterrissage le long du vecteur de charge déterminé jusqu'à ce qu'une liberté de charge soit atteinte à l'emplacement du boulon de liaison entre le train d'atterrissage et l'avion.
